# EUROPEAN PATENT APPLICATION

(11) **EP 2 075 923 A1**
(43) Date of publication of application: **01.07.2009**
(21) Application number: 07846233.0
(22) Date of filing: 29.12.2007
(51) Int. Cl.: H04B 7/005

(54) **A DISTRIBUTING METHOD FOR CARRIER POWER IN THE SAME POWER AMPLIFIER AND A POWER AMPLIFIER**

(30) Priority: 18.05.2007 CN 200710108337
(71) Applicant: Huawei Technologies Co., Ltd., Longgang District, Shenzhen Guangdong 518129 (CN)
(72) Inventor: LIU, Xinlu, Shenzhen Guangdong 518129 (CN); CAI, Hua, Shenzhen Guangdong 518129 (CN); GUO, Fangfu, Shenzhen Guangdong 518129 (CN)
(74) Representative: Pfenning, Meinig & Partner GbR
(86) International application number: PCT/CN2007/071407
(87) International publication number: WO 2008/141518

(57) **Abstract**

A method for allocating power to carriers in one power amplifier and a power amplifier thereof are disclosed. According to the technical solution of the present invention, the sum of maximum transmit power set for the carriers is larger than the rated total power of the power amplifier. When the sum of transient transmit power of the carriers is less than or equal to the rated total power, the power amplifier allocates the transient transmit power of the carriers to the carriers; or else, the power amplifier allocates the rated total power to the carriers according to a preset rule. With the technical solution of the present invention, the power utilization of a power amplifier is increased.

## Description

### Field of the Invention

The present invention relates to radio communication technologies, and in particular, to allocating power to carriers in one power amplifier and a power amplifier thereof.

### Background of the Invention

With the development of mobile communication, Wideband Code Division Multiple Access (WCDMA) R99 networks constructed earlier will be faced with the increase of users and the requirement for larger capacity, especially in densely populated urban areas and central business districts. To enable a WCDMA network to provide larger capacity to meet requirements of user equipment (UE), R99 multi-carrier networks are emerging on the basis of the earlier WCDMA R99 network.

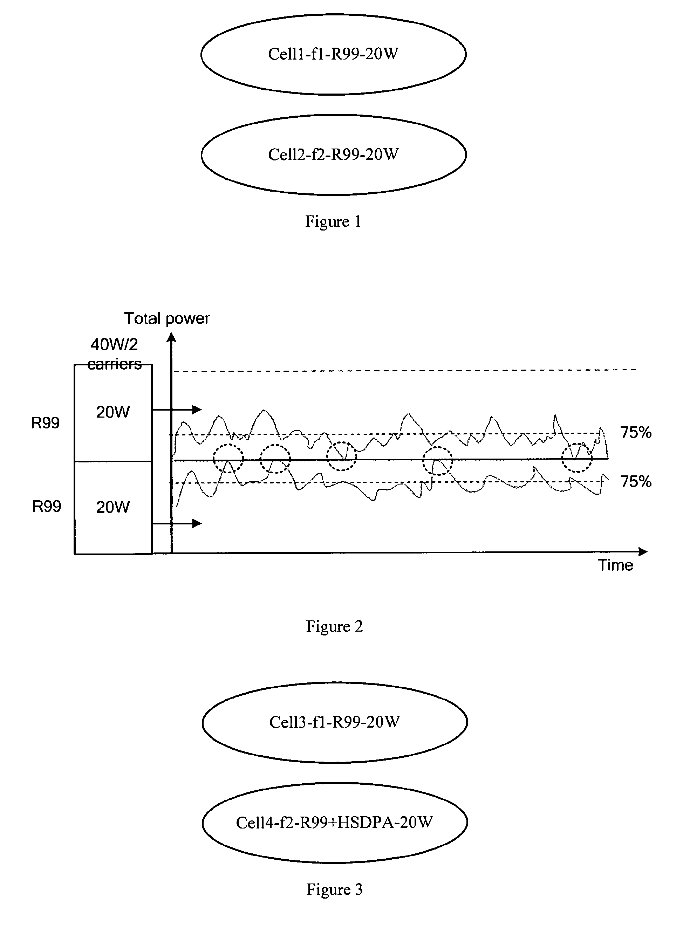

Figure 1 shows an R99/R99 dual-carrier networking diagram in the prior art. In Figure 1, two cells controlled by one base station (NodeB) and one radio network controller (RNC) exist in one area. Cell1-fl-R99-20W indicates that cell 1 supports the f1 frequency and provides R99 services and the maximum transmit power of its carrier is 20W; Cell2-f2-R99-20W indicates cell 2 supports the f2 frequency and also provides R99 services and the maximum transmit power of its carrier is 20W. The two cells in the figure are identical in size and symmetrical, which means their signals cover the same area. The R99/R99 dual-carrier networking increases the capacity of a WCDMA network to a large extent.

For the R99/R99 dual-carrier networking shown in Figure 1, usually a same power amplifier in one NodeB provides power for the two carriers. The two carriers share power resources of the power amplifier. The rated total power of the power amplifier is 40W, which means the maximum transmit power is 40W. The power allocated to the two carriers is fixedly the maximum transmit power of the carriers. This means the maximum transmit power is preset fixedly for the two carriers, that is, 20W as shown in Figure 1. No matter whether a carrier is busy or idle, the transmit power of the carrier shall not exceed the maximum transmit power of it. Figure 2 is a schematic drawing of power utilization in the R99/R99 dual-carrier networking shown in Figure 1. As shown in Figure 2, when the maximum transmit power of the power amplifier is 40W, the maximum transmit power of the carriers is fixed at 20W to avoid conflicts of power resources. Thus when the transient power of both carriers reaches the maximum 20W simultaneously, the power consumed will not exceed the maximum transmit power of the power amplifier. In addition, to ensure system stability, the entry threshold of R99 services is usually set at 75% of the maximum transmit power of a carrier to leave some power margin, to ensure system stability while allowing as many UEs as possible to access the system.

The above describes R99/R99 dual-carrier networking and its carrier power allocation scheme. Later the high speed downlink packet access (HSDPA) technology is incorporated in a WCDMA network so that a user may enjoy higher downlink data speeds (up to 14.4 Mbps). R99/HSDPA dual-carrier networking is a common way to offer compatibility of both R99 and HSDPA services and provide a large-capacity high-speed network as well..

Figure 3 shows an R99/HSDPA dual-carrier networking diagram in the prior art. As shown in Figure 3, two cells exist in one area, where cell 3 only supports R99 services and cell 4 supports both R99 and HSDPA services. Cell3-f1-R99-20W indicates that cell 3 supports the f1 frequency and only provides R99 services and the maximum transmit power of its carrier is 20W; Cell4-f2-R99+HSDPA-20W indicates that cell 4 supports the f2 frequency and provides both R99 and HSDPA services and the maximum transmit power of its carrier is 20W. The two cells are identical in size and symmetrical, which means signals of the two cells cover the same area.

Like R99/R99 dual-carrier networking, R99/HSDPA dual-carrier networking also adopts a carrier power allocation scheme using fixed maximum carrier transmit power. In Figure 3, when the maximum transmit power of the power amplifier is 40W, the maximum transmit power of both carriers is fixed at 20W.

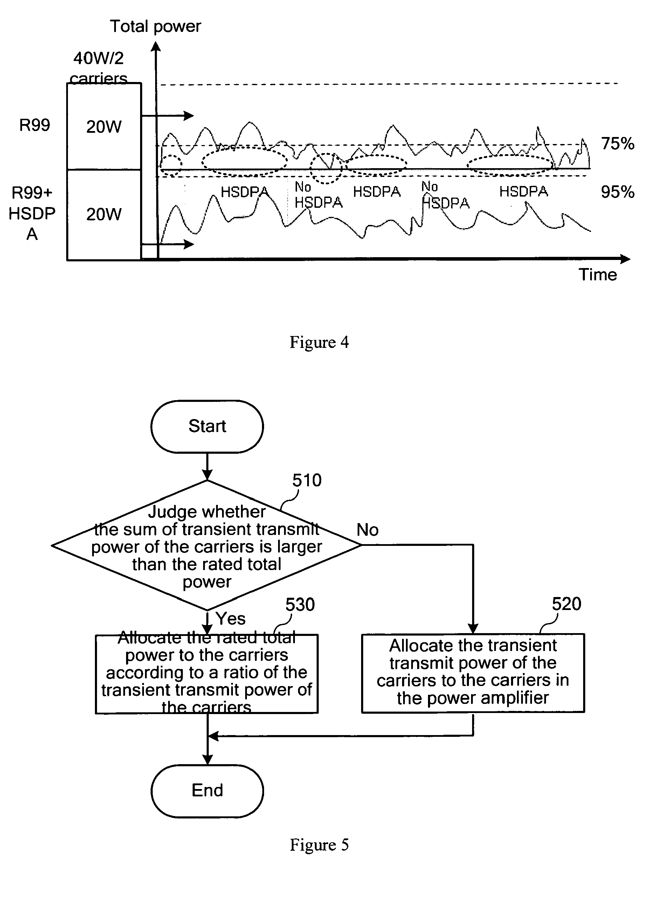

Unlike R99/R99 dual-carrier networking, in R99/HSDPA dual-carrier networking, the entry threshold of R99 services is usually set at 75% of the maximum transmit power to leave some power margin, to ensure system stability while HSDPA services may mostly utilize 95% of the maximum transmit power. For the f2 carrier, when R99 and HSDPA services co-exist, the power requirement of R99 services may be satisfied first. Figure 4 is a schematic drawing of power utilization in the R99/HSDPA dual-carrier networking shown in Figure 3. As shown in Figure 4, R99/HSDPA dual-carrier networking provides higher downlink data speeds while increasing system capacity.

The inventor of the present invention, however, finds that, in R99/R99 or R99/HSDPA dual-carrier networking, the transient power of one carrier usually fluctuates because of arbitrariness and uncertainty when UEs initiate services. There are often scenarios where one carrier is idle while the other carrier is busy. But, because the maximum transmit power of both carriers is limited to 20W, power resources of the heavily loaded carrier are insufficient while power resources of the lightly loaded carrier are wasted, as indicated by circles in Figure 2 and Figure 4. From the figures, it can be seen that about 20% of the power resources of the two carriers are not fully utilized. Power resources are somehow wasted.

In addition, the limited maximum transmit power also limits the access threshold of R99 services indirectly so that it is impossible to serve more users in a reasonable scope.

### Summary of the Invention

Embodiments of the invention provide a method for allocating power to carriers in one power amplifier and a power amplifier thereof so as to improve power utilization of the power amplifier.

A method for allocating power to carriers in one power amplifier which bears at least two carriers in one sector, includes:
setting maximum transmit power for carriers borne by the power amplifier so that a sum of the set maximum transmit power is larger than rated total power of the power amplifier; and
allocating transient transmit power of the carriers to the carriers in the power amplifier if the sum of the transient transmit power of the carriers is less than or equal to the rated total power; or allocating the rated total power to the carriers in the power amplifier according to a preset rule if the sum of transient transmit power of the carriers is larger than the rated total power.

A method for allocating power to carriers in one power amplifier which bears at least two carriers in one sector where at least one carrier bears R99 services and at least one carrier bears HSDPA services is provided. The method, includes:
setting maximum transmit power for carriers bearing R99 services so that a sum of the set maximum transmit power is larger than rated total power of the power amplifier; and
allocating transient transmit power for R99 services in carriers to the carriers bearing R99 services for transmitting R99 services in the power amplifier if the sum of the transient transmit power for R99 services in the carriers bearing R99 services is less than or equal to the rated total power; or allocating the rated total power to the carriers bearing R99 services in the power amplifier for transmitting R99 services according to a preset rule if the sum of transient transmit power for R99 services in the carriers is larger than the rated total power.

A method for allocating power to carriers in one power amplifier which bears at least two carriers in one sector where at least one carrier bears R99 services and at least one carrier bears HSDPA services includes:
deducting transmit power allocated to carriers for transmitting R99 services from maximum transmit power of the power amplifier to get remaining power; and
allocating all or part of the remaining power to carriers bearing HSDPA services for transmitting HSDPA services.

A power amplifier (PA) bearing at least two carriers in one sector includes:
a maximum power setting unit, adapted to set maximum transmit power for the carriers so that the sum of the set maximum transmit power is larger than rated total power of the power amplifier;
a judging unit, adapted to judge whether the sum of transient transmit power of the carriers is less than or equal to the rated total power; and
a PA power allocating unit, adapted to allocate transient transmit power of the carriers to the carriers when the judging unit determines that the sum of the transient transmit power of the carriers is less than or equal to the rated total power; or adapted to allocate the rated total power to the carriers according to a preset rule when the judging unit determines that the sum of transient transmit power of the carriers is larger than the rated total power.

A power amplifier (PA) bearing at least two carriers in one sector where at least one carrier bears R99 services and at least one carrier bears HSDPA services includes:
a maximum power setting unit, adapted to set maximum transmit power for carriers bearing R99 service so that the sum of the set maximum transmit power is larger than rated total power of the power amplifier;
a judging unit, adapted to judge whether the sum of transient transmit power for R99 services in the carriers bearing R99 services is less than or equal to the rated total power; and
a PA power allocating unit, adapted to allocate power equal to the transient transmit power of the carriers bearing R99 services to the carriers bearing R99 services when the judging unit determines that the sum of transient transmit power for R99 services in the carriers bearing R99 services is less than or equal to the rated total power; or adapted to allocate the rated total power to the carriers bearing R99 services for transmitting R99 services according to a preset rule when the judging unit determines that the sum of transient transmit power for R99 services in the carriers bearing R99 services is larger than the rated total power.

In embodiments of the invention, the sum of maximum transmit power set for carriers is larger than the rated total power. When the sum of transient transmit power of the carriers is less or equal to the rated total power, the transient transmit power of the carriers is allocated to the carriers in the power amplifier. When some carriers are idle and some carriers are busy, which means there is idle power in the power amplifier from an overall view, the busy carriers can get more power than allocated to the carriers in the power amplifier in the prior art. In this way, the currently busy carriers are able to use more idle power so that the overall utilization of the power amplifier is improved and further the coverage and capacity of the base station that the power amplifier serves are increased.

### Brief Description of the Drawings

Figure 1 shows an R99/R99 dual-carrier networking diagram in the prior art;
Figure 2 is a schematic drawing of power utilization in the R99/R99 dual-carrier networking shown in Figure 1;
Figure 3 shows an R99/HSDPA dual-carrier networking diagram in the prior art;
Figure 4 is a schematic drawing of power utilization in the R99/HSDPA dual-carrier networking shown in Figure 3;
Figure 5 shows the procedure of a method for allocating power to carriers in one power amplifier according to a first embodiment of the invention;
Figure 6 shows the result of R99/R99 dual-carrier power allocation according to the first embodiment of the invention;
Figure 7 shows the result of R99/HSDPA dual-carrier power allocation according to the first embodiment of the invention;
Figure 8 shows the result of power allocation in one power amplifier according to a fifth embodiment of the invention;
Figure 9 shows the procedure of a method for allocating power to carriers in one power amplifier according to a sixth embodiment of the invention;
Figure 10 shows the structure of a power amplifier according to a seventh embodiment of the invention; and
Figure 11 shows the structure of a power amplifier according to an eighth embodiment of the invention.

### Detailed Description of the Invention

To better explain the objective, technical solution and advantages of the invention, the following describes embodiments of the invention in detail with reference to the accompanying drawings.

The first embodiment of the invention relates to a method for allocating power to carriers in one power amplifier. The power amplifier bears at least two carriers in one sector and the sum of the maximum transmit power set for all carriers is larger than the rated total power of the power amplifier. If the sum of transient transmit power of all carriers is less than or equal to the rated total power of the power amplifier, the power amplifier allocates the transient transmit power of a carrier to the carrier; if the sum of transient transmit power of all carriers is larger than the rated total power of the power amplifier, the power amplifier allocates the rated total power to all carriers according to a preset rule. This improves the utilization of the power amplifier and further increases the coverage and capacity of the base station that the power amplifier serves.

The following description assumes that the power amplifier bears two carriers in one sector and both carriers bear only R99 services, which means R99/R99 dual-carrier networking.

In this embodiment of the invention, maximum transmit power is first set for the two carriers. The sum of maximum transmit power of the carriers is larger than the rated total power of the power amplifier. When the power amplifier bears only these two carriers, the rated total power is the maximum transmit power of the power amplifier. For example, the maximum transmit power of the power amplifier is 40W and the maximum transmit power of each carrier is set at 22W respectively. This means utilizing a 40W power amplifier as a 44W one. By increasing the maximum transmit power of the carriers, the proportion of power that is not fully utilized in idle hours drops without changing the actual maximum transmit power of the power amplifier, so that power of the power amplifier is utilized in a more efficient way. This method produces an obvious effect in scenarios where one of the two carriers is idle and the other is busy.

Figure 5 shows the procedure of a method for allocating power to carriers in one power amplifier according to the first embodiment of the invention. As shown in Figure 5, the procedure includes:
Step 510: It is judged whether the sum of transient transmit power of the carriers is larger than the rated total power, which is the maximum transmit power of the power amplifier. If the sum of transient transmit power of the carriers is less than or equal to the rated total power, step 520 proceeds; if the sum of transient transmit power of the carriers is larger than the rated total power, step 530 proceeds.
Step 520: The transient transmit power of the carriers is allocated to the carriers in the power amplifier directly if the sum of transient transmit power of the carriers is less than or equal to the rated total power.

For example, the transient transmit power of carrier 1 is 22W and that of carrier 2 is 16W. Because the sum of transient transmit power of the two carriers is 38W, less than 40W, which is the maximum transmit power of the power amplifier, 22W is allocated to carrier 1 and 16W is allocated to carrier 2 in the power amplifier to meet the needs of both carriers. After this allocation, the power that is not utilized in the power amplifier is 2W. In the prior art, however, the sum of maximum transmit power set for all carriers is equal to the maximum transmit power of the power amplifier, that is, 20W is set for carrier 1 and carrier 2 respectively. Therefore, in the same scenario as the example in this step, only 20W is allocated to carrier 1 and 16W is allocated to carrier 2 in the power amplifier. As a result, 4W is not utilized.

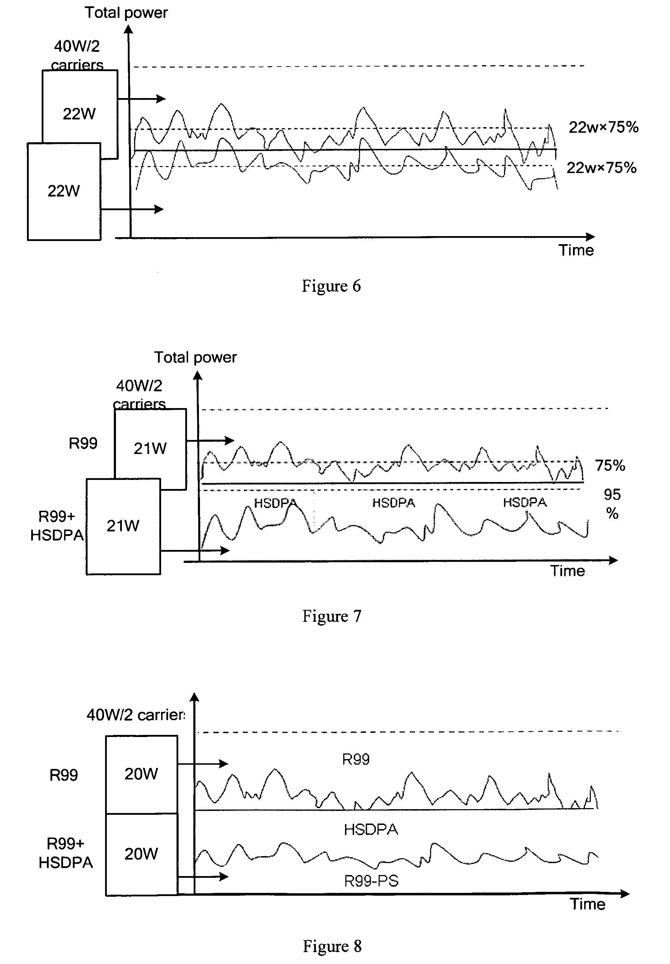

It can be seen that the proportion of power that is not fully utilized in idle hours is lower in this embodiment of the invention and the power utilization of the power amplifier is apparently improved. In addition, because the maximum transmit power of a carrier is raised, and the absolute power for entry of the carrier is also higher. Therefore, the power of the power amplifier is utilized more efficiently, and the capacity and coverage of the base station that the power amplifier serves are also increased. Figure 6 shows the result of R99/R99 dual-carrier power allocation according to the first embodiment of the invention. As shown in Figure 6, idle power in this embodiment of the invention is obviously less than that in the prior art.

Step 530: The rated total power, also the maximum transmit power, of the power amplifier is allocated to the carriers according to a ratio of transient transmit power of the carriers, if the sum of transient transmit power of the carriers is larger than the rated total power. For example, the transient transmit power of carrier 1 is 22W and the transient transmit power of carrier 2 is 22W. Then the sum of transient transmit power of the two carriers is 44W, which is larger than the total power 40W. In this case, the ratio of transient transmit power of carrier 1 to transient transmit power of carrier 2 is 1:1. The maximum transmit power of the power amplifier is allocated to carrier 1 and carrier 2 according to this ratio so that the actual power allocated to carrier 1 is 20W and that allocated to carrier 2 is also 20W. This ensures that the actually allocated power will not exceed the total power of the power amplifier and guarantees the normal work of the power amplifier while the power utilization of the power amplifier is increased.

In this embodiment of the invention, the maximum transmit power set for the carriers may be both 22W and may be other values larger than 20, such as 21W and 23W. If the sum of maximum transmit power of the carriers is larger than 40W, the effect of this embodiment of the invention may be achieved. The specific setting may be decided according to the result of actual operation or emulation.

In this embodiment of the invention, two carriers in the power amplifier bear only R99 services. In practice, one carrier may bear only R99 services and the other carrier may bear both R99 and HSDPA services, as shown in Figure 7. Figure 7 shows the result of R99/HSDPA dual-carrier power allocation according to the first embodiment of the invention. Or, both carriers may bear R99 and HSDPA services at the same time. No matter what services the two carriers respectively bear, the power allocation rule of the carriers is similar to this embodiment of the invention.

It should also be noted that, in this embodiment of the invention, one power amplifier bears two carriers. In practice, the power amplifier may bear more carriers, for example, four, and the sum of maximum transmit power set for the four carriers is larger than the maximum transmit power of the power amplifier. Power is allocated according to the method in this embodiment of the invention. Or, the power amplifier may bear multiple carriers and the sum of maximum transmit power set for some of the carriers is larger than the maximum transmit power of the power amplifier. Power is allocated to this part of carriers according to the method in this embodiment of the invention while power is allocated to the other carriers according to the prior art.

The second embodiment of the invention also relates to a method for allocating power to carriers in one power amplifier, which is similar to the method provided in the first embodiment. The difference lies in that in the first embodiment, when the sum of transient transmit power of the carriers is larger than the rated total power of the power amplifier, the rated total power of the power amplifier is allocated to the carriers according to a ratio of the transient transmit power of the carriers while in the second embodiment, a priority is set for each carrier so that when the sum of transient transmit power of the carriers is larger than the rated total power of the power amplifier, power is allocated to the high-priority carrier first and the remaining power is allocated to the low-priority carrier. For example, a higher priority is set for carrier 1 and a priority lower than that of carrier 1 is set for carrier 2. When the transient transmit power of carrier 1 is 22W and the transient transmit power of carrier 2 is also 22W, 22W is allocated to carrier 1 and the remaining 18W is allocated to carrier 2 in the power amplifier. Compared with the first embodiment of the invention, this embodiment better meets the needs of the high-priority carrier when both carriers are busy.

Besides the two allocation rules provided in the first and second embodiments of the invention, when the sum of transient transmit power of the carriers is larger than the rated total power of the power amplifier, the rated total power of the power amplifier may be allocated to the carriers according to any other allocation rule if the allocation rule enables reasonable allocation of power, without being limited to the ratio-based and priority-based modes.

The third embodiment of the invention also relates to a method for allocating power to carriers in one power amplifier. The power amplifier bears at least two carriers of one sector, where at least one carrier bears R99 services and at least one carrier bears HSDPA services. In this embodiment of the invention, the sum of transmit power of R99 services in all carriers is deducted from the maximum transmit power or the rated power of the power amplifier to get remaining power. Then all or part of the remaining power is allocated to carriers bearing HSDPA services for transmitting HSDPA services.

The following description assumes that the power amplifier bears two carriers in one sector, where one carrier (carrier 1) bears only R99 services and the other carrier (carrier 2) bears only HSDPA services.

Suppose the maximum transmit power of the power amplifier is 40W and the maximum transmit power of both carriers is 20W.

In power allocation, the method for allocating power for R99 services in carrier 1 is the same as the prior art, and the power allocated is less than or equal to the maximum transmit power set for the carrier, that is, less than or equal to 20W. After the transmit power for R99 services in carrier 1 is deducted from the maximum transmit power of the power amplifier, all of the remaining power is allocated to the carrier bearing HSDPA services for transmitting HSDPA services. For example, at time t1, the transient transmit power for R99 services in carrier 1 is 17W. Then 17W is allocated in the power amplifier for R99 services in carrier 1. The remaining 23W (40W-17W) is all allocated to HSDPA services in carrier 2. Therefore, compared with the prior art, this embodiment of the invention minimizes the power of the power amplifier that is not utilized and saves power resources without affecting R99 services.

The fourth embodiment of the invention relates to a method for allocating power to carriers in one power amplifier, which is similar to the method provided in the third embodiment. The difference lies in that, in the third embodiment, the sum of transmit power for R99 services in the carriers is deducted from the total transmit power of the power amplifier and then all the remaining power is allocated to carriers bearing HSDPA services for transmitting HSDPA services so as to maximize the power utilization of the power amplifier while in the fourth embodiment, to ensure system stability, part of the remaining power is allocated to carriers bearing HSDPA services for transmitting HSDPA services. Part of the remaining power may be 95% of the total remaining power so as to leave some idle power to improve system stability.

The fifth embodiment of the invention also relates to a method for allocating power to carriers in one power amplifier, which is similar to the method provided in the third embodiment. The difference lies in that, in the third embodiment, a carrier borne by the power amplifier only bears R99 or HSDPA services, while in the fifth embodiment, some carriers borne by the power amplifier bear only R99 services and the other carriers bear both R99 and HSDPA services.

Suppose that the power amplifier bears two carriers, where carrier 1 bears only R99 services and carrier 2 bears both R99 and HSDPA services. The maximum transmit power of the power amplifier is 40W and the maximum transmit power of both carriers is 20W respectively. In this embodiment of the invention, the maximum transmit power of a carrier is only applicable to R99 services, equivalent to the maximum transmit power for R99 services in the carrier. The maximum transmit power of a carrier does not limit the power for HSDPA services in the carrier.

In power allocation, the power allocated in the power amplifier for R99 services in each of the two carriers is less than or equal to the maximum transmit power set for the carrier, that is, less than or equal to 20W. The sum of transmit power for R99 services in the carriers is deducted from the maximum transmit power of the power amplifier, and then all the remaining power is allocated to the carrier bearing HSDPA services for transmitting HSDPA services. For example, at time t1, the transient transmit power for R99 services in carrier 1 is 12W and the transient transmit power for R99 services in carrier 2 is 14W. Then, 12W is allocated for R99 services in carrier 1 and 14W is allocated for R99 services in carrier 2. The remaining 14W (40W-12W-14W) is all allocated for HSDPA services in carrier 2. Compared with the prior art, this method obviously improves the power utilization of the power amplifier and increases the capacity of the base station which the power amplifier belongs to. In another example, the transient transmit power for R99 services in carrier 1 is 18W and the transient transmit power for R99 services in carrier 2 is 17W. Then, 18W is allocated for R99 services in carrier 1 and 17W is allocated for R99 services in carrier 2. The remaining 5W (40W-18W-17W) is all allocated for HSDPA services in carrier 2. It can be seen that by allowing HSDPA services to fully utilize the remaining power of the power amplifier, this embodiment of the invention may minimize the idle power of the power amplifier and save power resources without affecting R99 services. Figure 8 shows the result of carrier power allocation in one power amplifier according to the fifth embodiment of the invention. From the figure, it can be seen that power resources of the power amplifier are fully utilized.

In this embodiment, one power amplifier bears two carriers, where one carrier bears only R99 services and the other carrier bears both R99 and HSDPA services. In practice, the power amplifier may bear more carriers if at least one of the carriers bears R99 services and at least one carrier bears HSDPA services. For example, the power amplifier may bear four carriers, where two carriers bear only R99 services and the other two carriers bear both R99 and HSDPA services. Then, in the specific implementation, the power allocated for R99 services in each of the four carriers must be less than or equal to the maximum transmit power set for the carrier and all the remaining power after allocation for R99 services is allocated for HSDPA services in two carriers.

The sixth embodiment of the invention also relates to a method for allocating power to carriers in one power amplifier, which is similar to the method provided in the third embodiment. The difference lies in that in the sixth embodiment, maximum transmit power is set for each carrier bearing R99 services previously and the sum of the maximum transmit power set for all the carriers is larger than the rated total power. When all the carriers borne by the power amplifier bear R99 services, the rated total power is the maximum transmit power of the power amplifier.

For example, the power amplifier bears two carriers of one sector and both carriers bear R99 services, where carrier 1 bears only R99 services and carrier 2 bears both R99 and HSDPA services. When the maximum transmit power of the power amplifier is 40W, the maximum transmit power set for each carrier may be 22W. This means utilizing a 40W power amplifier as a 44W one. By increasing the maximum transmit power of the carriers, the proportion of power that is not fully utilized in idle hours drops without changing the actual total power of the power amplifier, so that power of the power amplifier is utilized in a more efficient way. In this embodiment of the invention, the maximum transmit power of a carrier is only applicable to R99 services, equivalent to the maximum transmit power for R99 services in the carrier. The maximum transmit power of a carrier does not limit the power for HSDPA services in the carrier.

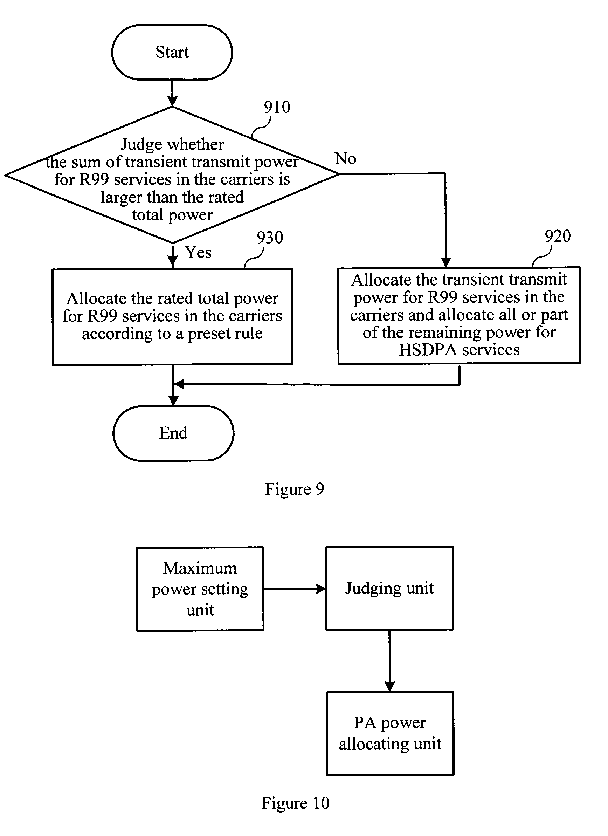

Figure 9 shows the procedure of a method for allocating power to carriers in one power amplifier according to the sixth embodiment of the invention. As shown in Figure 9, the procedure includes:
Step 910: It is judged whether the sum of transient transmit services in the carriers is larger than the rated total power, which is the maximum transmit power of the power amplifier in this embodiment of the invention. If the sum of transient transmit power of the carriers is less than or equal to the rated total power, step 920 proceeds; if the sum of transient transmit power of the carriers is larger than the rated total power, step 930 proceeds.
Step 920: The transient transmit power of the carriers is allocated to the carriers in the power amplifier directly when the sum of transient transmit power of R99 services in the carriers is less than or equal to the rated total power. The sum of transient transmit power of R99 services in the carriers is deducted from the maximum transmit power of the power amplifier to get remaining power. All or part of the remaining power is allocated to carriers bearing HSDPA services for transmitting HSDPA services.

For example, the transient transmit power of R99 services in carrier 1 is 18W and the transient transmit power for R99 services in carrier 2 is 16W. The sum of transient transmit power for R99 services in the two carriers is 34W, less than 40W, which is the maximum transmit power of the power amplifier. Therefore, in this step, 18W is allocated for R99 services in carrier 1 in the power amplifier and 16W is allocated for R99 services in carrier 2 to meet the needs of R99 services in both carriers. Afterwards, all or part of the remaining 6W is allocated for HSDPA services in carrier 2. Thus, power of the power amplifier is utilized in a most efficient way.
Step 930: When the sum of transient transmit power for R99 services in the carriers is larger than the rated total power, the rated total power, or the maximum transmit power of the power amplifier in the embodiment of the invention, is allocated to R99 services in the carriers according to a preset rule. The preset rule may be: allocating the rated total power for R99 services in the carriers according to a ratio of the transient transmit power for R99 services in the carriers; or setting priorities for carriers bearing R99 services and allocating the maximum transmit power of the power amplifier for R99 services in the high-priority carrier first and allocating the remaining power for R99 services in the low-priority carrier; or any other preset rule. This ensures that the actually allocated power will not exceed the maximum transmit power of the power amplifier and guarantees the normal work of the power amplifier while the power utilization of the power amplifier is increased.

In this embodiment of the invention, the maximum transmit power set for the carriers may be 22W and may be other values larger than 20W, such as 21W and 23W. If the sum of maximum transmit power of the carriers is larger than 40W, the effect of this embodiment of the invention may be achieved. The specific setting may be decided according to the result of actual operation or emulation.

The embodiments of the invention are not only applicable to WCDMA systems but also applicable to systems in other modes, such as the Global System for Mobile communication (GSM), Code Division Multiple Access (CDMA), CDMA2000, Worldwide Interoperability for Microwave Access (WiMAX) and Long Term Evolution (LTE), if there is at least one power amplifier bearing multiple carriers in the system.

All the foregoing embodiments of the invention are described by assuming the maximum transmit power of the power amplifier to be 40W for the purpose of better explanation. In practice, the maximum transmit power of the power amplifier is not limited to 40W but may be any value within the normal total power range of the power amplifier.

The seventh embodiment of the invention relates to a system for allocating power to carriers in one power amplifier, which bears at least two carriers in one sector.

Figure 10 shows the structure of a power amplifier (PA) according to the seventh embodiment of the invention. As shown in Figure 10, the system includes:
a maximum power setting unit, adapted to set maximum transmit power for carriers borne by the power amplifier so that the sum of maximum transmit power set for the carriers is larger than the rated total power of the power amplifier, which is the maximum transmit power of the power amplifier;
a judging unit, adapted to judge whether the sum of transient transmit power of the carriers is less than or equal to the rated total power; and
a PA power allocating unit, adapted to allocate power to the carriers according to the judgment result of the judging unit, allocating the transient transmit power of the carriers to the carriers in the power amplifier if the judging unit determines that the sum of transient transmit power of the carriers is less than or equal to the rated total power; or allocating the rated total power in the power amplifier according to a preset rule if the sum of transient transmit power of the carriers is larger than the rated total power.

Because the sum of maximum transmit power set for the carriers is larger than the rated total power, when some carriers are idle and some carriers are busy, which means there is idle power in the power amplifier from an overall view, the busy carriers can get more power than allocated to the carriers in the power amplifier in the prior art. In this way, the currently busy carriers are able to use more idle power so that the overall utilization of the power amplifier is improved and further the coverage and capacity of the base station that the power amplifier serves are increased.

In Figure 10, the PA power allocating unit may allocate the rated total power to the carriers according to a ratio of transient transmit power of the carriers, which is able to compress the power of the carriers in a fair manner; or, priorities are set for the carriers and the PA power allocating unit may allocate the rated total power to high-priority carriers first and allocate the remaining power to low-priority carriers so as to better meet the needs of high-priority carriers.

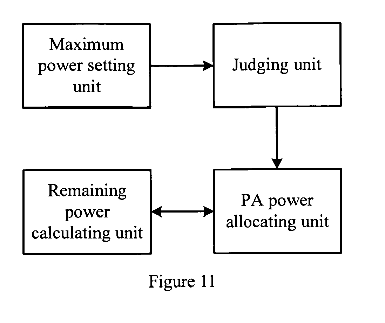

The eighth embodiment of the invention also relates to a system for allocating power to carriers in one power amplifier, which bears at least two carriers in one sector, where at least one carrier bears R99 services and at least one carrier bears HSDPA services. Figure 11 show the structure of a power amplifier (PA) according to the eighth embodiment of the invention. As shown in Figure 11, the system includes:
a maximum power setting unit, adapted to set maximum transmit power for carriers bearing R99 services so that the sum of the set maximum transmit power is larger than the rated total power of the power amplifier;
a judging unit, adapted to judge whether the sum of transient transmit services in the carriers bearing R99 services is less than or equal to the rated total power; and
a PA power allocating unit, adapted to allocate power equal to the transient transmit power of the carriers bearing R99 services to the carriers bearing R99 services when the judging unit determines that the sum of transient transmit power for R99 services in the carriers bearing R99 services is less than or equal to the rated total power; or adapted to allocate the rated total power to the carriers bearing R99 services for transmitting R99 services according to a preset rule when the judging unit determines that the sum of transient transmit power for R99 services in the carriers bearing R99 services is larger than the rated total power.

In this embodiment of the invention, the maximum transmit power of a carrier is only applicable to R99 services, equivalent to the maximum transmit power for R99 services in the carrier. The maximum transmit power of a carrier does not limit the power for HSDPA services in the carrier.

The system shown in Figure 11 may further include a remaining power calculating unit, adapted to deduct the power allocated to carriers for transmitting R99 services from the maximum transmit power of the power amplifier to get remaining power.

The PA power allocating unit is further adapted to allocate all or part of the remaining power to carriers bearing HSDPA services for transmitting HSDPA services. In this way, the idle power of the power amplifier is minimized without affecting R99 services by allowing HSDPA services to utilize the remaining power. Thus power resources are saved, the power utilization of the power amplifier is improved and the capacity of the base station that the power amplifier serves is indirectly increased.

In Figure 11, the PA power allocating unit is adapted to allocate the rated total power to carriers bearing R99 services for transmitting R99 services according to a ratio of transient transmit power for R99 services in the carriers; or adapted to set priorities for the carriers and allocate the rated total power to high-priority carriers first for transmitting R99 services and allocate the remaining power to low-priority carriers for transmitting R99 services.

In the embodiment shown in Figure 11, because the sum of maximum transmit power set for the carriers bearing R99 services is larger than the rated total power, when some carriers are idle and some carriers are busy, which means there is idle power in the power amplifier from an overall view, the busy carriers can get more power than allocated to the carriers in the power amplifier in the prior art. In this way, the currently busy carriers bearing R99 services are able to use more idle power so that the overall utilization of the power amplifier is improved and further the coverage and capacity of the base station that the power amplifier serves are increased.

In conclusion, in embodiments of the invention, the sum of maximum transmit power set for carriers is larger than the rated total power. When the sum of transient transmit power of the carriers is less or equal to the rated total power, the transient transmit power of the carriers is allocated to the carriers in the power amplifier. When some carriers are idles and some carriers are busy, which means there is idle power in the power amplifier from an overall view, the busy carriers can get more power than allocated to the carriers in the power amplifier in the prior art. In this way, the currently busy carriers are able to use more idle power so that the overall utilization of the power amplifier is improved and further the coverage and capacity of the base station that the PA serves are increased.

If the sum of transient transmit power of the carriers is larger than the rated total power, the rated total power is allocated to the carriers according to a preset rule. Because the sum of maximum transmit power set for the carriers is larger than the rated total power, the actual allocable power in the power amplifier is less than the power required by the carriers. Such allocation avoids a conflict between control and implementation.

The preset rule may be: allocating the rated total power to the carriers according to a ratio of transient transmit power of the carriers, which is able to compress the power of the carriers in a fair manner; or, setting priorities for the carriers and allocating the rated total power to high-priority carriers first and allocating the remaining power to low-priority carriers so as to better meet the needs of high-priority carriers.

If at least one of the carriers bears R99 services and at least one of the carriers bear HSDPA services, embodiments of the invention may only limit power allocated for R99 services in the carriers and deduct the sum of transmit power for R99 services in the carriers from the total transmit power of the power amplifier to get remaining power and allocate all or part of the remaining power to carriers bearing HSDPA services for transmitting HSDPA services. In this way, the idle power of the power amplifier is minimized without affecting R99 services by allowing HSDPA services to utilize the remaining power. This saves power resources, improves the power utilization of the power amplifier and indirectly increases the capacity of the base station that the power amplifier serves.

Although the technical scheme of the present invention has been described through exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A method for allocating power to carriers in one power amplifier bearing at least two carriers in one sector, comprising:
setting maximum transmit power for the carriers borne by the power amplifier so that a sum of the set maximum transmit power is larger than rated total power of the power amplifier; and
allocating transient transmit power of the carriers to the carriers in the power amplifier if the sum of the transient transmit power of the carriers is less than or equal to the rated total power;
allocating the rated total power to the carriers in the power amplifier according to a preset rule if the sum of transient transmit power of the carriers is larger than the rated total power.

2. The method of claim 1, wherein the rated total power is maximum transmit power of the power amplifier.

3. The method of claim 1, wherein the process of allocating the rated total power to the carriers according to a preset rule comprises:
allocating the rated total power to the carriers according a ratio of the transient transmit power of the carriers; or
setting priorities for the carriers, allocating the rated total power to high-priority carriers first and allocating the remaining power to low-priority carriers.

4. A method for allocating power to carriers in one power amplifier bearing at least two carriers in one sector, wherein at least one carrier bears R99 services and at least one carrier bears high speed downlink packet access (HSDPA) services, and the method comprises:
setting maximum transmit power for the carriers bearing R99 services so that a sum of the set maximum transmit power is larger than rated total power of the power amplifier; and
allocating power equal to transient transmit power for R99 services in the carriers bearing R99 services to the carriers for transmitting R99 services in the power amplifier if the sum of the transient transmit power for R99 services in the carriers bearing R99 services is less than or equal to the rated total power;
allocating the rated total power to the carriers bearing R99 services in the power amplifier for transmitting R99 services according to a preset rule if the sum of transient transmit power for R99 services in the carriers bearing R99 services is larger than the rated total power.

5. The method of claim 4, further comprising:
deducting power allocated to the carriers for transmitting R99 services from the rated total power of the power amplifier to get remaining power; and
allocating all or part of the remaining power to carriers bearing HSDPA services for transmitting HSDPA services.

6. The method of claim 4 or 5, wherein, if the carriers borne by the power amplifier all bear R99 services, the rated total power is maximum transmit power of the power amplifier.

7. The method of claim 4 or 5, wherein the process of allocating the rated total power to the carriers bearing R99 services according to a preset rule comprises:
allocating the rated total power to the carriers bearing R99 services for transmitting R99 services according to a ratio of transient transmit power for R99 services in the carriers; or
setting priorities for the carriers bearing R99 services, allocating the rated total power to high-priority carriers first for transmitting R99 services and allocating the remaining total power to low-priority carriers for transmitting R99 services.

8. A method for allocating power to carriers in one power amplifier bearing at least two carriers in one sector, wherein at least one carrier bears R99 services and at least one carrier bears high speed downlink packet access (HSDPA) services, and the method comprises:
deducting transmit power allocated to carriers for transmitting R99 services from maximum transmit power of the power amplifier to get remaining power; and
allocating all or part of the remaining power to carriers bearing HSDPA services for transmitting HSDPA services.

9. The method of claim 8, further comprising: setting maximum transmit power for the carriers bearing R99 services so that a sum of the set maximum transmit power is larger than rated total power of the power amplifier;
before allocating all or part of the remaining power to carriers bearing HSDPA services, the method further comprising:
allocating power equal to transient transmit power for R99 services in the carriers bearing R99 services to the carriers in the power amplifier for transmitting R99 services if a sum of the transient transmit power for R99 services in the carriers bearing R99 services is smaller than or equal to the rated total power; or
allocating the rated total power to the carriers bearing R99 services for transmitting R99 services according to a preset rule if the sum of the transient transmit power for R99 services in the carriers bearing R99 services is larger than the rated total power.

10. A power amplifier (PA) bearing at least two carriers in one sector, comprising:
a maximum power setting unit, adapted to set maximum transmit power for the carriers so that the sum of the set maximum transmit power is larger than rated total power of the power amplifier;
a judging unit, adapted to judge whether the sum of transient transmit power of the carriers is less than or equal to the rated total power; and
a PA power allocating unit, adapted to allocate transient transmit power of the carriers to the carriers if the sum of the transient transmit power of the carriers is less than or equal to the rated total power; or allocating the rated total power to the carriers according to a preset rule if the sum of transient transmit power of the carriers is larger than the rated total power.

11. The power amplifier of claim 10, wherein:
the PA power allocating unit is adapted to allocate the rated total power to the carriers according to a ratio of transient transmit power of the carriers; or adapted to set priorities for the carriers, allocate the rated total power to high-priority carriers first and allocate remaining power to low-priority carriers.

12. A power amplifier (PA) bearing at least two carriers in one sector, wherein at least one carrier bears R99 services and at least one carrier bears high speed downlink packet access (HSDPA) services, and the PA comprises:
a maximum power setting unit, adapted to set maximum transmit power for carriers bearing R99 services so that the sum of the set maximum transmit power is larger than rated total power of the power amplifier;
a judging unit, adapted to judge whether the sum of transient transmit power for R99 services in the carriers bearing R99 services is less than or equal to the rated total power; and
a PA power allocating unit, adapted to allocate power equal to the transient transmit power of the carriers bearing R99 services to the carriers bearing R99 services when the judging unit determines that the sum of transient transmit power for R99 services in the carriers bearing R99 services is less than or equal to the rated total power; or adapted to allocate the rated total power to the carriers bearing R99 services for transmitting R99 services according to a preset rule when the judging unit determines that the sum of transient transmit power for R99 services in the carriers bearing R99 services is larger than the rated total power.

13. The power amplifier of claim 12, further comprising:
a remaining power calculating unit, adapted to deduct power allocated to the carriers for transmitting R99 services from the rated total power of the power amplifier to get the remaining power; wherein
the PA power allocating unit is further adapted to allocate all or part of the remaining power to carriers bearing HSDPA services for transmitting HSDPA services.

14. The power amplifier of claim 13, wherein:
the PA power allocating unit is adapted to allocate the rated total power to carriers bearing R99 services for transmitting R99 services according to a ratio of transient transmit power for R99 services in the carriers; or adapted to set priorities for the carriers and allocate the rated total power to high-priority carriers first for transmitting R99 services and allocate the remaining power to low-priority carriers for transmitting R99 services.
